(19)

Europäisches
Patentamt
European
Patent Office
Office européen
des brevets

(11) **EP 2 477 149 A1**

(12) **EUROPEAN PATENT APPLICATION**

(43) Date of publication:
**18.07.2012 Bulletin 2012/29**

(51) Int Cl.:
***G06Q 30/02*** *(2012.01)*

(21) Application number: **12150906.1**

(22) Date of filing: **12.01.2012**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**

(30) Priority: **12.01.2011 US 201113005403**

(71) Applicant: **Scentara Oy AB
00100 Helsinki (FI)**

(72) Inventors:
• **Pasila, Antti
  00810 Helsinki (FI)**
• **Paqvalén, Lars-Michaël
  02750 Espoo (FI)**

(74) Representative: **Lamberg, Samu Petteri et al
Espatent Oy
Kaivokatu 10 D
00100 Helsinki (FI)**

(54) **System and method for providing advertisement in web sites**

(57) Embodiments of the invention are concerned with showing information such as advertisements in website pictures. Advertisements are shown in web site as some of the embedded pictures in the web site are hovered. According to embodiments advertisements can be related to content of such hovered pictures such as products shown in the pictures.

FIGURE 1

EP 2 477 149 A1

**Description**

Field of the Invention

The present invention relates generally to providing additional information on digital objects such as pictures in web pages. Example of additional information or information elements according to some embodiments is advertisements related to product and services presented in pictures or videos within website content.

Background of the Invention

Internet is used widely to find and access information. Number of web sites globally can be estimated to be billions. Typically web sites contain information and elements such as text, pictures, videos, audio etc. Rationale and motivation to set up a web site depends on person, organization or company that is setting up the site.

Companies such as retailers set up web sites mainly in order to provide consumers information about their products and services. One example of such web site is web page of computer manufacturer Apple® (http://www.apple.com) where the web site contains information about new products (computers, iPods, iPhones) as well as applications (software) which is available for sale. Site provides information for consumer either on where is the closest retail shop and in addition it provides consumers possibility to purchase goods on line using payment methods like credit card or bank payment. Other examples of web site set up in order to sell goods and services to consumers include Amazon® (http://www.amazon.com) for purchasing books (real and electronic) and Hotels.com (http://www.hotels.com) for selecting and booking hotel rooms globally. Many of these companies with product or service want more consumers to visit their site and ultimately purchase the product or the service. One method for getting more consumers to site is means of advertisement in other web sites.

There are organizations and companies that are in business of providing information such as news for consumers. One example of such web site is news web site of CNN® (http://www.cnn.com) a web site of global news channel CNN. The site contains information of breaking news and other news locally and globally. Other examples of web sites for providing information include video web sites like YouTube® (http://www.youtube.com) for consumers to access (and share) videos. Additional examples of web services are social network sites such as Facebook (http://www.facebook.com) for consumers to discuss and share information with their peer groups and Google (http//www.google.com) for providing search services for consumers. The business rationale for above companies running sites of above examples is mainly advertisement driven i.e. web site owner makes money by presenting advertisements to consumers who visit the site. Money is typically generated when advertisement is shown (pay per view), when a link in the advertisement is clicked (pay per click), or when interaction with advertisement results on sales (pay per results).

Problem with said advertisement methods is that it is often found irrelevant or annoying for consumers. Main reason to visit site is in the end of the day anyway to get to see content of the site not the advertisements.

Prior art US 7,003,734 describers an advertisement type where a banner advertisement includes "pop up" areas. In such advertisement additional information in form of text, picture, video or other html content is presented to user when user hover with mouse over banner advertisement. Problem with prior art is that it requires publisher web site (such as CNN.com) to host some of the images and other data related to pop up in order to overcome limitations in Javascript object model prohibiting cross domain interaction or to host publisher content at advertisement provider domain.

Summary of the Invention

In accordance with aspects of the present invention, there is provided a method and system according to the appended claims 1 and 13, respectively.

At least some embodiments of the invention provide a method for creating advertisements to be presented in a pop up frame in a web site. Said method comprises of storing in a database advertisement contents from plurality of advertisers, at least some of the advertisers being store owners and some of the advertisers being product owners. Store owners and product owners can store in database bid information relating to advertisement content. Bid information related to advertisements can consists of a first bid amount, the first bid amount being set by a store owner and defining specific a bid amount related to the store owner, and a set of second bid amounts, the set of second bid amounts being set by a store owner and defining bids allocated to plurality of products or product owners, and the bid information relating to advertisements of product owners comprising a third bid amount, the third bid amount being set by a product owner and defining bid amounts allocated to plurality of products. A request for an advertisement to be displayed in the pop up frame relating to a hovered product can be received by advertisement service and advertisement is created by selecting and combining an advertisement of a product owner and an advertisement of a store owner. Selecting can be based on comparing sum of the first, second and third bid amounts of bids set by store owners and product owners of which the second and third bid being allocated to the hovered product.

Additionally in web page with text and at least one picture or video are stored on a server and the picture has been associated with a product has designated area which trigger a pop up frame to be displayed when hovered with mouse or other pointing means such as touch screen.

Additionally owner of the picture can set association of a pop up frame i.e. define for example product information relating to the picture content. As picture is shown in target web site and a hovering is recognized an advertisement is created. According to embodiments store owners sets a separate second bids associated to different product owners or products. Advertisement content can comprise universal resource locator (URL).

In some embodiments the website reputation is checked prior selecting the advertisement content to the created advertisement. Reputation can be checked using data stored to a server which collects users' experience on web sites in world wide web (www-sites).

Aditionally if the URL directs first to third-party tracking services, which record a user's click and then redirects the user to a content owner's website or to a store owner's website, the reputation of the site the user is redirected can be checked.

Further features and advantages of the invention will become apparent from the following description of preferred embodiments of the invention, given by way of example only, which is made with reference to the accompanying drawings.

Brief Description of the Drawings

Figure 1 is a schematic diagram showing an environment in which an embodiment of the invention can operate.

Figure 2 is a schematic picture of some elements in a web site;

Figure 3 shows example tagbubble i.e. pop up frame with advertisement.

Figure 4 is a schematic flow diagram showing some steps of defining advertisement area and activating tagged picture.

Figure 5 shows some message flows in an environment in which an embodiment of the invention ca operate

Figure 6 shows an example business model and revenue flows according to an embodiment of the invention

Figure 7 shows some example database structures in embodiments of the invention.

Figure 8 shows example environment of accessing some web services.

Figure 9 shows example usage flows of some embodiments of the invention.

Detailed Description of the Invention

As described above, embodiments of the invention are concerned with improving efficiency of performing acceptance and relevancy of advertisements and other additional information in web pages.

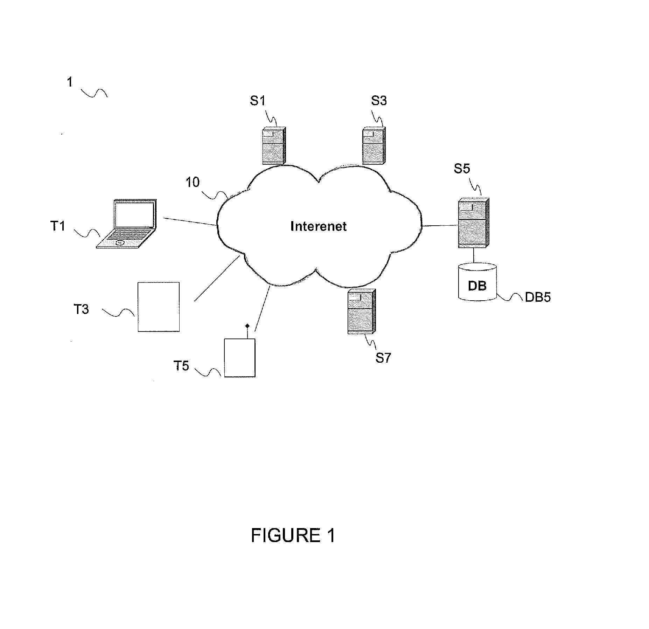

Figure 1 shows high-level architecture of the environment where embodiments of the invention can work. The system 1 comprises of Internet 10, user terminals T1, T3, T5, service provider servers S1, S3, S7, advertisement service provider S5 and databases such as DB5. Terminals T1, T3 and T5 can be any user terminals such as personal computers (PC), laptops, web pads such as Apple iPads, mobile terminals such as mobile phones, smart phones, iPhones etc. Terminals can be connected to Internet via any available connection method. Typically for example mobile terminal (T5) is connected to Internet 10 using cellular connectivity such as 3rd generation (3G) network. Terminals like web pads (T3) are often connected to Internet 10 via Wireless local area network connection (WLAN) and personal computers often using wired communication such as Digital Subscriber Line (DSL). Terminals T1, T3, T5 typically contain web browser such as Safari™, Firefox™, Internet Explorer™, Chrome™ etc for enabling to render web content in the terminal using known methods. Service provider servers S1, S3 and S7 are hosting web site for users to access via Internet 10. Servers S1, S3, S7 might have Apache™ web server software which is used to host actual web content. Web content can be for example HTML (Hypertext mark up language), XHTML (Extended Hypertext mark up language), PHP (Hypertext preprocessor), Java™ etc including text, videos, pictures, audio and other digital content. Advertisement service server S5 can be implemented in top of for example Apache web server or other known server architecture. There can be database DB5 included in advertisement service infrastructure. Database DB5 can be for example Oracle™, MySQL or any other database.

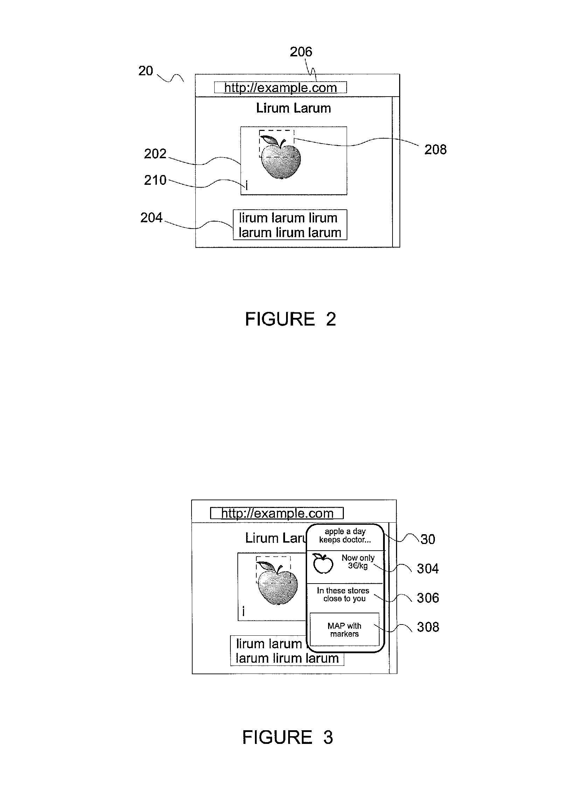

In one embodiment of the invention there is web content in web service servers S1, S3 or S7. An example of the service is web page with text 204 and pictures 202 as shown in Figure 2. Figure 2 shows a typical browser 20 view. Browser 20 has field 206 for inputting URL (Universal Resource Locator) such as http://example.com. The page is rendered in browser using fetched source code (html, php etc). Page can have for example text 204 and pictures 202. According to embodiment of the invention a picture 202 has designated area(s) 208 which trigger popup frame to be displayed when hovered with mouse or other pointing means such as touch screen. Picture 202 might have indication in the picture that there are such areas by either highlighting the area 208 or for example visual indication 210 in the corner of picture that picture contains designated area or areas 208. As consumer hovers mouse over the area 208 a pop up frame (referred as Tagbubble later) 30 is displayed in top of the information content of the web page as shown in Figure 3. Tagbubble 30 can include information like text 306, pricing etc information about the product 304 and for example a map 308 to find stores to purchase the product advertised in the Tagbubble 30. Tagbubble 30 can contain any HTML code and can include pictures, videos etc any digital items. Tagbubble 30 can contain clickable items such as URL's to get more info either in the Tagbubble 30 or in to direct to other web site.

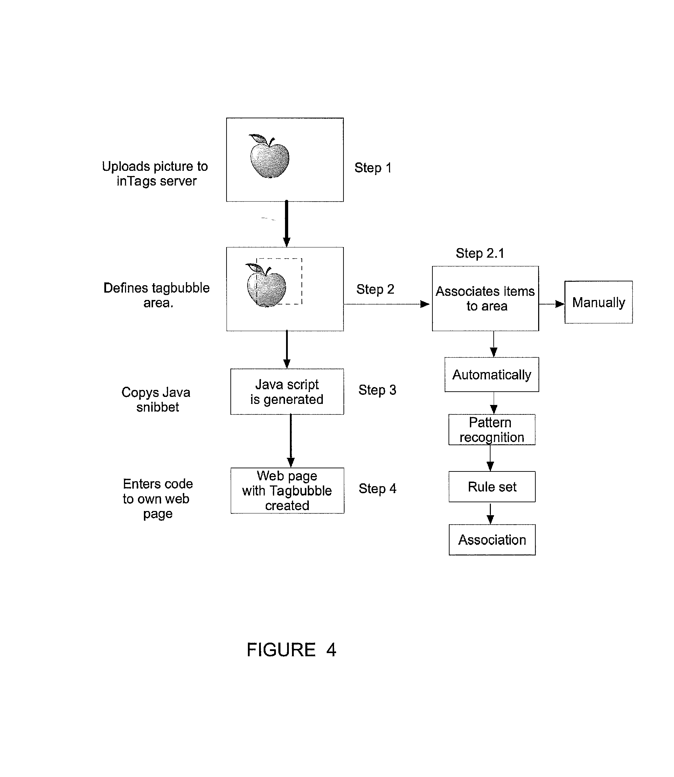

A content (picture, video) owner can associate tagbubble 30 to his content by accessing advertisement service server S5 via web interface over Internet 10. Figure 4 shows some steps of said association. In Step 1 content owner uploads figure to server S5 or database DB5. Using web based user interface (UI) the content owner defines area in the picture where he/she wants to associate additional information (Step 2). User might define also which information such as product attribute, available stores, pricing, preferred advertisement types, price for advertisement placement in the picture, preferred brands to be associated with the picture, preferred products and services to be associated with the picture in Step 2.1. In one embodiment this is done automatically using pattern and/or picture recognition techniques. Picture would be scanned to for example recognize brands or products or logos or trademarks or other information elements visible in the tagbubble area (208). Said brands and/or products would be associated with the tagbubble area and stored in the database DB5 of advertisement service using rule set. Information related to product can be also European Article Code (EAN) or similar standardized product code. The step 2.1 can take place also later. In Step 3 advertisement service server S5 generates Javascript snipped code for content owner to copy and paste (Step 4) to the code of his web service in desired location. Said Html (php etc) code would now include a code snippet <img.../xxx/xxx.com.. > <...../123324.js> in those places where picture 202 with tagbubble 208 is purposed to be. <img..> attribute fetches picture to web site from specified network location. In preferred implementation the picture 202 is in same server as tagbubbles but the invention is not limited to this. Picture can be in any server including content owners own web site or other 3rd party web site. In an other embodiment generated code is copied and pasted (Step 4) by other than content owner, for example web service owner such as CNN.com, in order to embed said content to web site of third party.

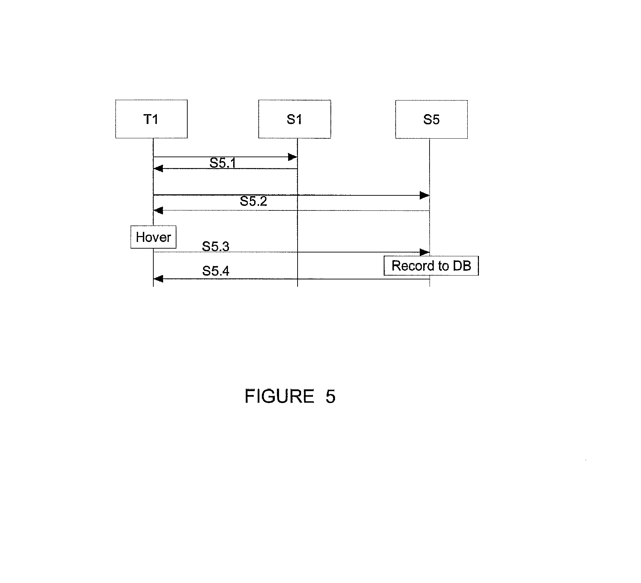

One key element in providing advertisement services or other services using pop ups is monitoring if hovering has taken place or not. Said monitoring can be used as basis for billing for the services. Figure 5 illustrates an embodiment where a user of terminal T1 is in web site hosted by service provider server S1. In step S5.1 browser fetches web content from the site. Content can include Javascript snippet created as described earlier. In one embodiment of the invention Java script is located in different domain (in server S5) than actual web page (which is in server S1) that is requesting the Java script. Tagbubble 30 is constructed preferably in server system S5 as dynamic java script. In step S5.2 said Java script is downloaded to user terminal T1. Java script is called as the hovering takes place i.e. mouse or other pointing means is used over the picture as discussed earlier. Since there are certain security related reasons in Java typically the script can not inform about the hovering to other domain (S5) than where the actual target web site (S1) is. This can be overcome with an embodiment of having in the Java script a call for preferably 1x1 pixel image from server S5. As an example there could be code such as http://server_S5.com/show-pic/some-info/<ID12345>/other-info/ <inlocationXY2>/file/a.jpg. Which is called by browser in step S5.3. As the server S5 gets request for file a.jpg it can store in the database DB5 time, date, browser related info, Internet Protocol (IP) address, location information etc. In addition there can be some parameters embedded in the URL (universal resource locator) such as unique ID (ID 12345 in example code) to identify which generated Java snippet was hovered, which picture was hovered, which part of the picture was hovered etc. There could be also other info such as location info of the user, etc. Server S5 would return to the browser file a .jpg which would render it normally.

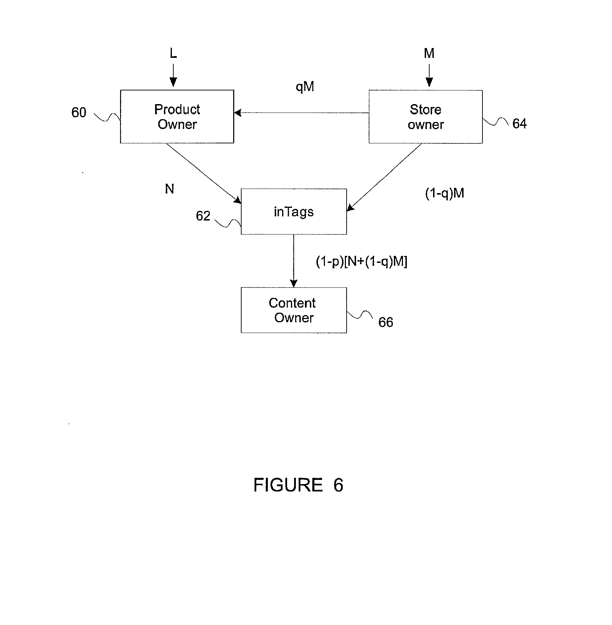

According to embodiment of invention new novel business model is enabled as shown in Figure 6. Parties involved in the example are "inTags" 62 i.e. company running tagbubble service i.e. hosting/managing/operating servers S5 and database DB5. 66 "content owner" i.e. party, person owning certain or all copyrights for the pictures to be shown in any participating web site. Content owner can be thus be an individual or it can be for example some picture storage service such as Flikr.com. Store owner 64 refers to owner of "real store" with facilities for customer to visit (such as Tesco in UK or Wal-Mart in US) or virtual store i.e. web shop such as amazon.com. Registered storeowners can have their physical location i.e. address stored in database DB5. In some cases store owners carry multiple brands and multiple products of multiple brands. In some cases stores can be limited to certain brands and/or products. Product owner 60 refers to owner of brand name of the product or manufacturer of the product such as Nike™ for shoes and other sporting goods or as Apple™ for computers, software, applications and phones.

Store owners 64 and product owners 60 can register in intags service 62. When registering to the service store owners 64 can upload information, referred to also as information elements, on which products they carry, related availability (inventory) information, pricing information and store location and business hours information to mention few. Store owners can also define budget (allocation of funds of M) for presenting their information in possible tagbubble. Budget can be based on per view, per click, per action etc, it can have daily limits and there can be variable pricing on actions. In one embodiment store owner can decide which part of allocated funds M is divided between intags 62 and product owner 60. For example store owner can allocate q=30% of the funds to store owner and (100%-q)=70% to go to inTags 62. The allocation, also referred to as a weight factor, can be also defined by advertisement service provider. Allocation q can be dynamic i.e. it can vary depending on business rules. The allocation can also be different for different product store owner pairs. This is beneficial in business since in one embodiment tagbubble 30 is generated from unique product code information basis (such as EAN code). The product code is used to get as primary information about the product from product owner 60. By allowing store owner to allocate some of its funds to product owner it gets to influence on which products are more visible in the advertisements. This helps product owner 60 for example in situation where it has overstock of certain products. Additionally store owners can define in the database which product (EAN codes) they carry enabling mapping of which stores carry which products.

Product owner 60 can define attributes for the products and services it is offering for consumers. It can also define budget N that it desires to use to promote goods and services. The money for the budget N comes either entirely from store owners (several store owners carrying the product) or product owner can deposit in system own funds as well (L) i.e. N can be L+qM (where qM should be understood to be sum of $q_1M_1 + q_2M_2,...+q_nM_n$ where index indicates ID of store owner contributing to product owner 60).

As picture with tagbubble is hovered both product owner and storeowner are invoiced depending on set parameters. According to some embodiments invoicing might take place after clicking shown advertisements instead or in addition to impression based invoicing. Revenues to advertisement service provider 62 would be N+(1-q)M on each action. Service provider 62 can share part of the revenue associated with content owner i.e. one who has provided with picture. Content owner could get (1-p)(N+(1-qM)) of the revenues where p is revenue share percent for example 50%. Described business model embodiment enables to generate revenues from multiple sources and it will open new revenue opportunities for content owners. As an example freelance type of photographer could now offer any of the pictures for free to any web site owner such as CNN. When CNN embeds picture in the site it would include said tagbubble Java code snippet. Every time a user goes to CNN site and hovers over the picture (from freelancer) freelancer would get some revenues. There would be no need for CNN to pay royalties on the said picture (although they could). In further embodiments some of the revenues could be shared back to target web site (such as CNN). In one embodiment tagbubble shows product name such as Nike (if there is for example Nike shoe associated with tagbubble) and then info (map, name, phone number, click to call phone number, URL) of store owner which is giving largest share of allocated funds i.e. qM is highest.

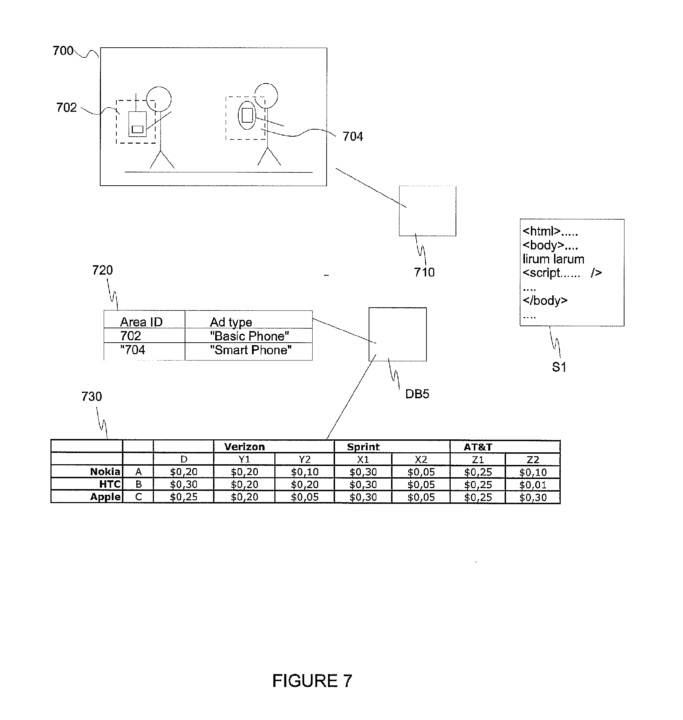

As an example embodiment, an advertisement to be presented in a pop up frame in a web site is created as shown in Figure 7. There is picture 700 with areas 702 and 704 defined as advertisement pop up areas (tagbubble pop up) with associated ad types as shown in table 720 stored in database DB5. In this example area identification (AreaID) 702 is associated with product category "Basic phone" referring to so called low end phone with basic phone functionality and perhaps low price point phone and AreaID 704 is associated with product category "Smart phone" referring to so called high end phone such as smart phone with touch screen, navigation etc. Associations can be done by content (picture) owner, by community, by advertisement service provider or other third party or automatically.

Database DB5 further contains advertisement content or information elements from a plurality of advertisers such as phone manufactures Nokia, HTC and Apple (being in this example product owners) and telecom carriers (operators) Verizon, Sprint and AT&T (being in the example store owners). Advertisements and information elements could be for example, a logo of the company and/or some text and/or video and/or picture and/or link to desired target site of the advertiser.

Each advertiser can set (preferably via secured web interface) bid information, also referred to herein as weight factors or weights, relating to the advertisement content or information element. In the example of Figure 7 there is database entry 730 in database DB5. Store owners can set a plurality of different bid amounts or weight factors. For example two weight factors are shown in Figure 7. The first weight factor relates to the price per action the store owner is willing to pay for having an information element associated with the store owner being shown in the web hovering case. Although the disclosed embodiments are generally described herein with respect to a store owner, the aspects of the disclosed embodiments can include groups of store owners. The second bid amount or weight factor is the amount of money allocated to product owner or the information elements of the product owner. These are designated in 730 as X1, X2, Y1, Y2 and Z1, Z2 respectively. Product owners, also referred to in groups, provide bids or weight factor to have advertisements or information elements corresponding to their products display, the weight factors being shown in column D of the table 730.

When the end user access web service running in server S1 hovers over advertisement area 702 or 704 of picture 700, a request of showing pop up advertisement related to hovered area is received by advertisement server system S5. As an example, if the end user hovers over area 704 "Smart phone" related advertisement will be shown to end user browsing the web site S1 with for example HTML content. For this example it is assumed that phones from HTC and Apple are so called "Smart phones". Now according to an embodiment table 730 is used to calculate which advertisement or information element combination of the groups including Apple + (Verizon or Sprint or AT&T) or HTC + (Verizon or Sprint or AT&T) gives highest price or weight factor for the advertisement provider. The calculated sum of the weight factors for each combination of groups (service provider and product provider) in this example are:

$$\text{Apple + Verizon} => \quad \$0.25+\$0.2+\$0.05=\$0.5$$

$$\text{Apple + Sprint} => \quad \$0.25+\$0.3+\$0.05=\$0.6$$

$$\text{Apple + AT\&T} => \quad \$0.25+\$0.25+\$0.3=\$0.8$$

$$\text{HTC + Verizon} => \quad \$0.3+\$0.2+\$0.2 = \$0.7$$

$$\text{HTC + Sprint} => \quad \$0.3+\$0.3+\$0.05=\$0.65$$

$$\text{HTC + AT\&T} => \quad \$0.3+\$0.25+\$0.01=\$0.56$$

In this example, the highest combination is Apple + AT&T, resulting in a pop up ad of Apple product related advertisement or information element 304 combined with AT&T store owner related advertisement or information element 306. A benefit of the described model is that store owners can control which products they are associated with. For example in this example AT&T gets ad together with Apple due to allocated funds to product owner (in column Z2). In other words an advertisement is created by selecting and combining an advertisement of a product owner and an advertisement of a store owner, the selecting being based on comparing sum of the first, second and third bid amounts or weight factors of bids set by store owners and product owners of which the second and third bid being allocated to the hovered product.

In other example end user hovers over area 702 of picture 700. The area 702 is defined as low end phone. As Nokia is only low end phone in an example in database it is evident that Nokia advertisement will be shown. According to embodiments of the invention other part i.e. store owner part of the advertisement is calculated by adding to Nokia bid $0.2 First bids by each store owners (carriers) Verizon, Sprint and AT&T and their respective bids to product owner as well i.e.

$$\text{Nokia + Verizon} => \quad \$0.2+\$0.2+\$0.1=\$0.5$$

$$\text{Nokia} + \text{Sprint} => \quad \$0.2+\$0.3+\$0.05=\$0.55$$

$$\text{Nokia} + \text{AT\&T} => \quad \$0.2+\$0.25+\$0.1=\$0.55$$

Giving as highest $0.55 for two combinations. Sprint or AT&T could be selected as round robin, randomly or according to looking on for example second bid i.e. column X2 and Z2 i.e. funds allocated to product owner. As AT&T is allocating most funds to Nokia it could be determined to be winner i.e. combination of Nokia + AT&T advertisement would be shown in pop up frame.

Further according to embodiments of the invention allocated second bids i.e. Y2, X2 and Z2 columns in table 730 are not given as direct revenues to advertisement provider but are allocated as additional funds to product owner. This is particularly beneficial from product owner point of view due to lowering their advertisement budget. If product of product owner is such that all store owners want to be associated with there can be situation where product owner does not have to allocate funds at all or it can make money by allocations.

In a further embodiment selection of which advertisements to be shown can be done by using alternative measurements such as user preferences, location of user, location of user in respect to store owner facilities physical location, randomly, in round robin style etc. This is particularly beneficial in case of two or more bid information/ amounts being same.

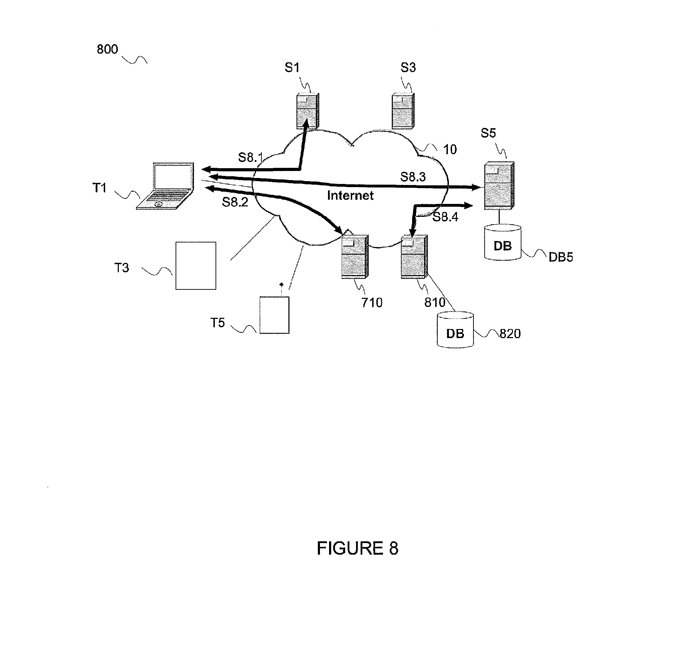

A further embodiment of the invention is shown in environment of Figure 8. Terminals T1, T3 and T5 are capable of accessing information over Internet 10 from various web service and servers. As an example user of laptop T1 browses to web site hosted in server S1 in step S8.1. There is code embedded in code as described earlier thus browser of laptop T1 downloads from picture owners server 710 in step S8.2 and renders it accordingly. As the user hovers over the picture advertisement provider server S5 is contacted in step S8.3. According to further embodiment advertisement provider contacts web service rating server 810 to get information if the site (in S1) qualifies as appropriate site to show advertisements of product owner or store owner as shown in step 8.4.

An example of such service could be Web on Trust (http://www.mywot.com) service where consumers rate web sites as they visit those. As the server S5 contacts server 810 it runs check on the database 820 for rating information on site S1. Additionally rating / trust service 810 could provide information on reliability or reported reliability of store owner which wants to advertise in the system. Trust server would return information to advertisements service S5 in step S8.4. Advertisement server would now decide in addition to business rules on which product owner and store owner to promote in the site if to promote any or only some store owners or some product owners. This is particularly important since for example product owners could define in trust server 810 database 820 some stores are not wanted by them to sell their products or could prefer one store over an other.

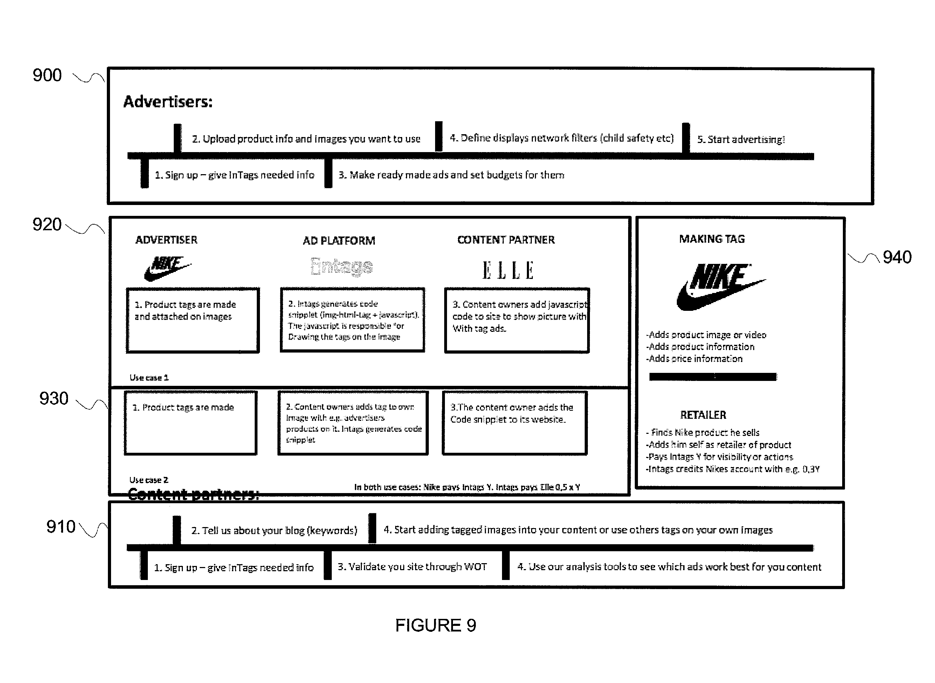

Additional examples of embodiments of the invention are shown in Figure 9. Box 900 shows steps for advertiser to start advertising with advertisement service provider (example Intags™ as advertisement service provider). In step 1 advertiser such as product or store owner signs up for service and provides basic info as name of advertiser, billing details etc. In step 2 advertiser uploads product info and images for the advertisement(s). In step 3 advertiser can use existing advertisement templates or use advertisements it has created. Advertiser set up advertisement budget. In step 4 advertiser can set up network filters such as defining which sites and on which type of pictures advertisements can be shown. In Step 5 advertisement campaign is started.

Box 910 of Figure 9 shows some steps on how content partner (i.e. web site owner such as cnn.com) can use embodiments of the invention. In step 1 content partner signs up for service i.e. provides name and other info. In step 2 information about content service such as blog or other web service is set to the system (keywords, tags etc). In step 3 site reputation score is allocated by validating (submitting) the site also to ranking service or reputation service such as Web on Trust 810. In step 4 content partner (web site owner) can start adding tagged images (in practice code snippets) in the web site or it can start to us other tags in own images. Content partner can use analysis tools of advertisement service provide to see which ads are performing best.

In box 920 of figure 9 a use case 1 is shown as three steps. In step 1 advertiser Nike® (product owner) makes product tags on some of the images in the service. In step 2 Intags generates code snippets (img-html-tag +javascript). The j avascript is responsible for drawing the tags on the image. In step 3 content owner (ELLE®) adds javascript code to the site showing picture with tag ads (tagbubble or pop up frame). Now ELLE® (www.elle.fi) can show in their web site Nike product related pictures with Nike advertisements and tags.

In box 930 of figure 9 a use case 2 is shown as three steps. In step 1 advertiser makes product tags. In step 2 content owners adds tags to own image with e.g. advertisers product on it. Intags generates code snippets. In step 3 content owner adds the code snippet to its website.

In box 940 of Figure 9 a flow of making tags (pop up frames) is shown. Product owner such as Nike® adds product image or video, adds product information and adds price information of the product to server S5 (and in database DB5 of). Retailer (store owner) finds from database DB5 Nike products he is selling. Retailer adds him self as retailer of said product and pays for Intags for visibility or actions (Y or M as in figure 6). Intags credits Nike account with specified ratio e.g. 0.3xY (i.e. q=30% as in figure 6).

The above embodiments are to be understood as illustrative examples of the invention. It is understood that any feature described in relation to any one embodiment may be used alone, or in combination with other features described, and may also be used in combination with one or more features of any other of the embodiments, or any combination of any other of the embodiments. Additionally some of the embodiments with certain steps can be executed in any order by any party. Some of the steps might not be needed in all cases of implementing the invention. Furthermore, equivalents and modifications no described above may also be employed without departing from the scope of the invention, which is defined in the accompanying claims.

**Claims**

1. A method for dynamic selection of information elements for display in a pop up frame of a web site on a device, the method comprising:

   storing in a database, information elements from two different groups of sources, the sources of the first group being related to different product assortments and the sources of the second group being related to individual products,
   the information elements in the first group each comprising a first weight factor and a second weight factor,
   the information elements in the second group each comprising a third weight factor,
   receiving, by a processor, a request for presentment of the pop up frame on the display,
   creating content to be presented in the pop up frame by the processor, responsive to the request, by selecting and combining an information element of the first group and an information element of the second group, the selecting comprising:

      automatically determining a combination of one of the information elements of the first group and one of the information elements of the second group that maximizes a sum of the first, second and third weight factors of information elements for the combination in question.

2. A method according to claim 1, wherein the determining of the combination comprises substeps of:

   calculating a sum of the first, second and third weight factors for each combination of one of the information elements of the first group and of one of the information elements of the second group;
   comparing the calculated sum of the first, second and third weight factors for each combination; and
   selecting a combination of information elements of the first group and of the second group corresponding to the highest calculated sum.

3. A method according to claim 1 or 2, the selecting of the information of the first and second groups comprises the substeps of:

   detecting a location identifier corresponding to a location of the device;
   identifying at least one information element of the first group and the second group corresponding to the location identifier;
   calculating a sum of the first, second and third weight factors for each combination of one of the identified information elements of the first group and of one of the identified information elements of the second group;
   comparing the calculated sum of the first, second and third weight factors for each combination; and
   selecting and combining identified information elements of the first group and of the second group corresponding to the highest calculated sum.

4. A method according to any preceding claim, wherein the first, second and third weight factors are associated with corresponding monetary values.

5. A method according to any preceding claim, wherein a web page with text and at least one picture are stored to a server, the picture being associated with an information element and positioned in a designated area on the display, the pop up frame being triggered to be displayed when the picture is hovered over with a mouse or other pointing means such as touch screen.

6. A method according to any preceding claim, wherein web page browsing is monitored to detect hovering over a designated area on the display and when hovering is detected, generating the request for presentment of the pop up frame.

7. A method according to any preceding claim, wherein a separate weight factor is set for different individual products.

8. A method according to any preceding claim, wherein a separate weight factor is set for a source of different individual products.

9. A method according to any preceding claim, wherein the information elements comprise a Uniform Resource Locator (URL).

10. A method according to any preceding claim, further comprising determining a fourth weight factor prior to selecting and combining information elements for creating the content to the pop up frame, the fourth weight factor corresponding to a reputation score of the website.

11. A method according to any preceding claim, comprising presenting the combined information element content on a display of the device.

12. A method according to any preceding claim, comprising generating the request by detecting a hovering of a pointing device over a displayed portion of the web site, the displayed portion being associated with at least one information element from the different groups of sources.

13. A system for dynamic selection of information elements for display in a pop up frame of a web page on a device, comprising:

a first database for storing information elements from two different groups of sources, the sources of the first group being related to different product assortments and the sources of the second group being related to individual products,
a second database for storing weight factors corresponding to the information elements of each group,
the information elements in the first group each comprising a first and second weight factor and the information elements in the second group each comprising a third weight factor,
a first server configured to detect a hovering over a designated area on the display and when hovering is detected, generate a request for presentment of the pop up frame and create an advertisement for presentment in the pop up frame by selecting and combining an information element from the first group and an information element of the second group, the selecting comprising:

automatically determining a combination of one of the information elements of the first group and one of the information elements of the second group that maximizes a sum of the first, second and third weight factors of information elements for the combination in question.

14. The system of claim 13, wherein the determining of the combination comprises substeps of:

calculating a sum of the first, second and third weight factors for each combination of one of the information elements of the first group and of one of the information elements of the second group;
comparing the calculated sum of the first, second and third weight factors for each combination; and
selecting a combination of information elements from the first group and the second group corresponding to the highest calculated sum.

15. A system of claim 13 or 14, wherein the selecting of the information of the first and second groups comprises the substeps of:

detecting a location identifier of the device;
identifying at least one information element of the first group and the second group corresponding to the location identifier;
calculating a sum of the first, second and third weight factors for each combination of one of the identified information elements of the first group and of one of the identified information elements of the second group;
comparing the calculated sum of the first, second and third weight factors for each combination; and
selecting and combining identified information elements of the first group and of the second group corresponding to the highest calculated sum.

FIGURE 1

206

20

http://example.com

Lirum Larum

202

210

204

208

lirum larum lirum
larum lirum larum

FIGURE 2

http://example.com

Lirum Lar

apple a day
keeps doctor...

30

Now only
3€/kg

304

In these stores
close to you

306

MAP with
markers

308

i

lirum larum
larum lirum larum

FIGURE 3

Uploads picture to
inTags server

Step 1

Defines tagbubble
area.

Step 2

Step 2.1

Associates items
to area

Manually

Copys Java
snibbet

Java script
is generated

Step 3

Automatically

Pattern
recognition

Enters code
to own web
page

Web page
with Tagbubble
created

Step 4

Rule set

Association

FIGURE 4

FIGURE 5

L           M

qM

60 — Product Owner    Store owner — 64

N

62 — inTags

$(1-q)M$

$(1-p)[N+(1-q)M]$

Content Owner — 66

FIGURE 6

```
<html>.....
<body>....
lirum larum
<script......  />
....
</body>
....
```

S1

| Area ID | Ad type |
|---------|---------------|
| 702 | "Basic Phone" |
| "704 | "Smart Phone" |

720

710

DB5

730

| | | | Verizon | | Sprint | | AT&T | |
|---|---|---|---|---|---|---|---|---|
| | | D | Y1 | Y2 | X1 | X2 | Z1 | Z2 |
| Nokia | A | $0,20 | $0,20 | $0,10 | $0,30 | $0,05 | $0,25 | $0,10 |
| HTC | B | $0,30 | $0,20 | $0,20 | $0,30 | $0,05 | $0,25 | $0,01 |
| Apple | C | $0,25 | $0,20 | $0,05 | $0,30 | $0,05 | $0,25 | $0,30 |

FIGURE 7

FIGURE 8

**Advertisers:**

2. Upload product info and images you want to use  |  4. Define displays network filters (child safety etc)  |  5. Start advertising!

1. Sign up – give InTags needed info  |  3. Make ready made ads and set budgets for them

---

| ADVERTISER | AD PLATFORM | CONTENT PARTNER | MAKING TAG |
|---|---|---|---|
| *NIKE* | Intags | ELLE | *NIKE* |
| 1. Product tags are made and attached on images | 2. Intags generates code snipplet (img-html-tag + javascript). The javascript is responsible for Drawing the tags on the image | 3. Content owners add javascript code to site to show picture with With tag ads. | -Adds product image or video<br>-Adds product information<br>-Adds price information |

Use case 1

| | | | |
|---|---|---|---|
| 1. Product tags are made | 2. Content owners adds tag to own Image with e.g. advertisers products on it. Intags generates code snipplet | 3.The content owner adds the Code snipplet to its website. | **RETAILER**<br>- Finds Nike product he sells<br>-Adds him self as retailer of product<br>-Pays Intags Y for visibility or actions<br>-Intags credits Nikes account with e.g. 0,3Y |

Use case 2

In both use cases: Nike pays Intags Y. Intags pays Elle 0,5 x Y

**Content partners:**

2. Tell us about your blog (keywords)  |  4. Start adding tagged images into your content or use others tags on your own images

1. Sign up – give InTags needed info  |  3. Validate you site through WOT  |  4. Use our analysis tools to see which ads work best for you content

FIGURE 9

EP 2 477 149 A1

Europäisches
Patentamt

European
Patent Office

Office européen
des brevets

**EUROPEAN SEARCH REPORT**

Application Number

EP 12 15 0906

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/268606 A1 (WU ALEX CHIH [US]) 21 October 2010 (2010-10-21)<br>* paragraph [0016] *<br>* paragraph [0025] - paragraph [0030] *<br>* paragraph [0035] - paragraph [0038] *<br>* paragraph [0043] - paragraph [0045] *<br>* paragraph [0061] *<br>----- | 1-15 | INV.<br>G06Q30/02 |
| | | | TECHNICAL FIELDS SEARCHED (IPC)<br><br>G06Q |

The present search report has been drawn up for all claims

| Place of search | Date of completion of the search | Examiner |
|---|---|---|
| The Hague | 4 April 2012 | Moser, Raimund |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

 

& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 12 15 0906

This annex lists the patent family members relating to the patent documents cited in the above-mentioned European search report.
The members are as contained in the European Patent Office EDP file on
The European Patent Office is in no way liable for these particulars which are merely given for the purpose of information.

04-04-2012

| Patent document cited in search report | | Publication date | Patent family member(s) | | Publication date |
|---|---|---|---|---|---|
| US 2010268606 | A1 | 21-10-2010 | AU | 2010236451 A1 | 03-11-2011 |
| | | | CA | 2758715 A1 | 21-10-2010 |
| | | | EP | 2419873 A2 | 22-02-2012 |
| | | | US | 2010268606 A1 | 21-10-2010 |
| | | | WO | 2010120978 A2 | 21-10-2010 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 7003734 B